# EUROPEAN PATENT SPECIFICATION

(11) **EP 2 206 284 B1**
(45) Date of publication and mention of the grant of the patent: **26.08.2015**
(21) Application number: 07843741.5
(22) Date of filing: 03.10.2007
(51) Int. Cl.: H04L 12/16, H04L 29/06

(54) **Method and apparatus for the prevention of unwanted calls in a callback system**
Verfahren und Vorrichtung zur Verhinderung unerwünschter Anrufe in einem Rückrufsystem
Procédé et appareil pour la prévention d'appels non voulus dans un système de rappel automatique

(43) Date of publication of application: 14.07.2010
(73) Proprietor: Art Technology Group, Inc., Cambridge, MA 02142 (US)
(72) Inventor: SIEGRIST, Joseph, Vienna VA 22180 (US)
(74) Representative: D Young & Co LLP
(86) International application number: PCT/US2007/080291
(87) International publication number: WO 2009/045212

(56) References cited:
- EP-A1- 1 780 998
- US-A- 5 524 145
- US-A1- 2002 137 490
- US-A1- 2002 164 006
- US-A1- 2003 069 933
- US-A1- 2006 188 081
- US-B1- 7 203 188

## Description

### BACKGROUND OF THE INVENTION

### Field of the Invention

The invention relates to communications systems generally, and more particularly to telephony systems in which a request for a call to a device can be made.

### Discussion of the Background

The use of the Internetto conduct transactions has become increasingly popular over the last several years. One use of the Internet has been the implementation of callback systems. In general, an Internet callback system allows a user who visits a website to request that some entity associated with the website initiate a call to the user. This call may be a call that is made via user's computer using a VoIP application, but is more commonly a PSTN (public switched telephone network) call made to a PSTN telephone number provided by the user.

A callback service is useful in many different situations, including, but not limited to, e-commerce. For example, the assignee of the present invention, eStara Corp., provides a Push-to-Talk™ service that contains a component known as

Phone2Phone™ which allows a user to enter their telephone number into a web page. The eStara Phone2Phone™ service will then automatically place a PSTN call to the telephone number specified by the user and to the web site owner's call center, and then bridge the two calls together to establish a PSTN connection between the user and the retailer. Callback systems can also be implemented with one or both portions of the call employing VoIP technology.

A problem with allowing the user to specify a device (either a PSTN extension or a URL different from the URL from which the user is making the callback request) to which the call is to be made is that it is difficult to verify the authenticity of the data, and users can enter bogus data. This can lead to unwanted calls, e.g., crank calls, where a malicious user makes multiple callback requests for calls to a party who does not desire such calls. Alternatively, a malicious user may harass a particular retailer by making single callback requests for callbacks to devices (e.g., different PSTN extensions or different URLs) corresponding to different requesting parties from the same retailer.

In the past, eStara has used a manual procedure to develop a blacklist to help prevent such calls. In this manual procedure, when a called party recognizes that a received call has not been requested by the calling party, the called party can add the calling party's number to eStara's blacklist by visiting the eStara website and/or sending an email identifying the number to which the unwanted callback was requested (this number is provided to the retailer to allow operation of screen pops of customer-specific information as described in co-pending U.S. patent application Serial No. 09/771,993 filed January 30, 2001, assigned to eStara, Inc.) This method has the drawback of requiring a manual operation on the part of the called party. Additionally, it is not effective against a malicious user who harasses a particular retailer by making multiple callback requests from different parties to the same retailer.

What is needed is an automated method for preventing unwanted calls that can prevent attacks by malicious users who make multiple callback requests for different user devices.

US 2006/188081 discloses systems and methods for call measurement services. The system includes a routing system, a client database, and a call block database. The routing system is configured to receiving an incoming call containing incoming call data which may include an original dialed number and a caller identifier. The client database stores at least one published number and at least one termination number, wherein each termination number corresponds to at least one published number. The call block database stores at least one blocked number. The routing system is operatively coupled to the client database and to the call block database and wherein the routing system is configured to route the incoming call to one of the termination numbers. Blocked numbers may be added to the call block database when telemarketing calling patterns are detected.

US 2002/164006 discloses an Electronic Document Call Back System with custom graphic or hypertext link visual indicia which may be embedded in an electronic document by a sender of said electronic document (which may be a company), which electronic document may be sent to a recipient (which may be a customer). When clicked upon by the customer with a computer mouse or other computer pointing device, the visual indicia, which links to a Call Request Page, causes to appear on the customer's computer screen said Call Request Page. The Call Request Page may include sections upon which the customer, who wishes to communicate by phone with the company, may enter at least their phone number so that a phone communication can be created with the company, and a graphic "call" button that is viewed on the customer's computer screen. The pushing of the "call" button engages a Web server; the Web server signals a telecom switch; the telecom switch capable of calling the phone number of the company; the telecom switch also capable of calling the phone number of the customer, and bridging the two calls together so that the company and customer can talk. Said Web server is capable of sending an email to said company which will include the information which said customer has entered on the Call Request Page, which may include said customer's name, email address, phone number and the like; said Web server capable of sending said customer a "thank you" or an auto-response email. The preferred embodiment includes the ability of the company to custom design the custom graphic or hypertext link visual indicia and to embed, either by a standard "copy and paste" operation or by means of embedding said visual indicia in an email signature template, said visual indicia in an electronic document to be sent to customers.

US 2003/069933 discloses a system in which a connection request from a remote host is denied by an e-mail service system, if the number of connection requests from the remote host exceeds a predetermined reference number, and the responsibility to re-send the denied e-mail is transferred to the requesting host. For the determination of connection permission or denial, the number of connection requests from the remote host is calculated with reference to corresponding to an IP address. By the IP filtering scheme, traffic of the e-mail service system can be effectively managed and controlled. The e-mail service system of the present invention includes a dynamic IP filtering module, a mail transfer agent (MTA), a receiving means for accepting a connection request from a remote host, a means for extracting an IP address corresponding to the requesting remote host according to an IP block, and a means for determining permission of connection by comparing a predetermined reference value with a summation value of the number of past requests made during a predetermined control time period and current request from the extracted IP address. The dynamic filtering module includes a means for resetting, before the determination of connection permission, a connection request number in a slice between previous connection time and current time.

EP 1780998 discloses a call blocking service which obviates the manual updating of a subscriber's blocking list; a so-called local communication policy. An embodiment includes a plurality of base stations, each capable of wirelessly transmitting across a geographic region and a server. A cell-phone, capable of roaming between regions, is operable to establish a wireless link with the base stations and through the base stations, with the server. The network contains a communication policy determining from which other communication devices a subscriber device can receive voice calls. The communication policy is updated, by the server, based on requests from the subscriber devices. Once a request is received from a subscriber device, the determination whether to update the communication policy can be based on a record of rejections respective to the caller requested to be blocked. Alternatively, the communication policy can be updated according to a trust policy maintained on the server respective to the subscriber device making the request; the trust policy represents the procedure to follow when a request is received from that subscriber device.

### BRIEF SUMMARY OF THE INVENTION

The invention is defined in the appended claims.

The present approach addresses the aforementioned issues to a great extent. As described herein, one or more parameters of the request, such as the user telephone number or user IP address or URL specified in the request as the party to whom the call is to be placed, the IP address or URL of the source computer from which the callback request originated, an identifier of the source computer from which the callback request originated (such as a unique identifier implemented through a cookie that identifies the device from which the callback request is made), and the party from whom the call is desired, are tracked for each call. A decision to automatically block the requested callback is made based on one or more of the following criteria: (a) a total number of requests received from the source computer during a period of time, (b) a total number of calls resulting from previous requests received from the source computer that are currently in progress, (c) a total number of requests received from the source computer for a call from the second party during a period of time, (d) a total number of requests received from the source computer for a call to the first party during a period of time, and (e) a total number of requests identifying the device of the first party during a period of time. Future callback requests originating from the same IP address/URL and/or bearing the same source computer identifier and/or directed to the same user telephone number can also be blacklisted.

As described herein, the user who receives a callback is provided with an automatic message indicating that they can prevent future calls by taking some action (e.g., pressing a DTMF key). The message can be provided for all calls, or alternatively may be provided only when there is reason to suspect that the call is unwanted. Once the user takes the specified action, the user telephone number and/or the source computer identifier accompanying the callback request and/or the IP address or URL from which the callback request initiated are added to the blacklist to prevent unwanted calls. This second aspect can also be extended to include the provision of the same message to the retailer. This would help in the situation where unwanted callbacks were being requested to a user PSTN extension that simply plays a recording (such as a recorded weather forecast)- once the retailer is connected to the recording, he can take the specified action to have blacklisted the user telephone number corresponding to the recording and/or the identifier of the source computer accompanying the callback request and/or the IP address/URL of the source computer from which the callback request was made.

### BRIEF DESCRIPTION OF THE DRAWINGS

A more complete appreciation of the invention and many of the attendant features and advantages thereof will be readily obtained as the same become better understood by reference to the following detailed description when considered in connection with the accompanying drawings, wherein:
Figure 1 is a block diagram indicating a system in which the present invention may be implemented.
Figure 2 is a flowchart illustrating a method for preventing unwanted calls according to one embodiment of the present invention.

### DETAILED DESCRIPTION

The present invention will be discussed with reference to preferred embodiments of callback systems. Specific details are set forth in order to provide a thorough understanding of the present invention. The preferred embodiments discussed herein should not be understood to limit the invention. Furthermore, for ease of understanding, certain method steps are delineated as separate steps; however, these steps should not be construed as necessarily distinct nor order dependent in their performance.

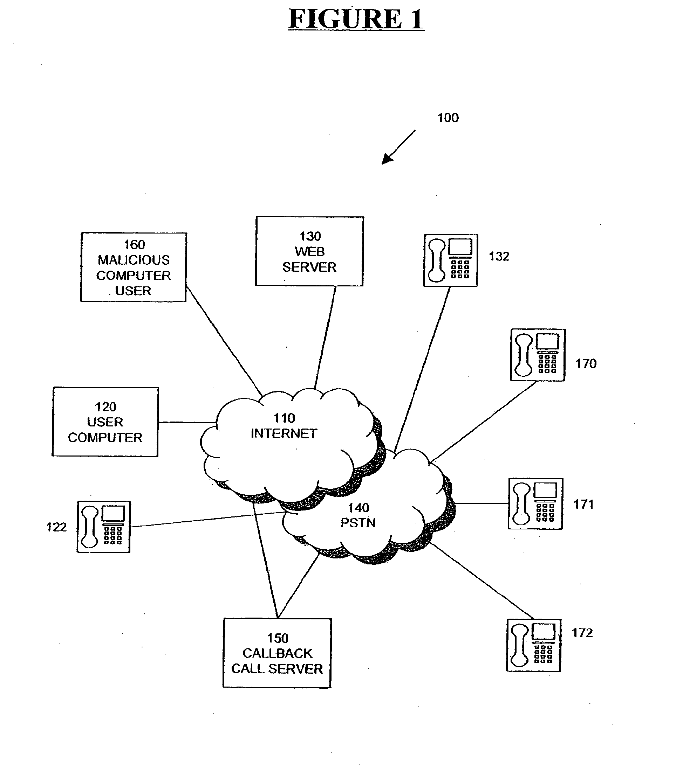

An communications system 100 with which the present invention may be practiced is illustrated in Fig. 1. The Internet 110 provides a data connection between a user computer 120 and a web server 130. The user computer may be any type of computer capable of data communication over the Internet 110, and is preferably a personal computer equipped with a world wide web browser. The web server 130 similarly may be any server capable of providing data over the Internet 110, and may be associated with a retailer or any other entity. Both the user computer 120 and the web server 130 may be connected by any means to the Internet 110, including the use of cable or PSTN modems (not shown in Fig. 1), and may be connected in any manner including directly or through an Internet Service Provider (also not shown in Fig. 1).

It should also be recognized that user computer 120 may be connected to the Internet through one or more proxy servers and/or firewalls (not shown in Fig. 1). In such cases, the IP address accompanying a message sent by such a computer through the proxy server(s) and/or firewall(s) to a third party may be the address of a proxy server or firewall rather than the IP address of the computer making the request.

One or more of the web pages provided by web server 130 may include an indication such as an icon or button that the user may use to request a callback from an entity associated with the web server 130 to a device associated with the user. The device may be the user computer 120 or a user PSTN extension 122 associated with the user. Normally, when the call is to be a VoIP call to the user computer 122, the user is not given the option of specifying an IP address/URL and the VoIP call is routed directly to the user computer 122. However, some systems may allow the specification of an alternate IP address or URL for a computer to which the VoIP call will be directed. Upon activating the icon/button, the user is prompted to specify a device (PSTN extension or, in some systems, IP address or URL) at which the callback is desired.

A callback request message is then transmitted from the user computer 120 to a callback call server 150. The call server 150 may be a single device or may represent a plurality of physically separate devices that together comprise a callback system. For example, the call server 150 may comprise a server connected to a conventional telephone switch in the case where a PSTN-PSTN callback is desired, and/or an IP-to-PSTN gateway where one of the legs of the callback is to be a VoIP call. Exemplary callback systems are described in the aforementioned U.S. patent application Serial No.09/771,993, filed January 30, 2001, entitled "Internet Telephony for Ecommerce". In multiple component embodiments, the various components of the callback server 150 may be connected to each other via the Internet 110 or by a private network. Additionally, data communications between the user computer 120 and the various components of the call server 150 may take place directly or may be funneled through a single device. It should also be recognized that the functions performed by the call server 150 and the web server 130 may be integrated into a single device or may be separate devices.

The callback call server 150 begins the process by placing a first call to the device specified by the user, over either the Internet 110 or the PSTN 140 (or some combination of the two). The callback service provider 150 then places a second call to a device associated with the web server 130, again over the Internet 110, the PSTN 140, or some combination of the two. By arrangement with the web site owner operating the web server 130, the device may be the web server 130 itself (or some other server associated with the retailer), or may be a PSTN extension 132 associated with the web site owner. It is also possible to place the call to the call to the device associated with the web server 130 first, then place the call to the device associated with the user computer 120, and bridge the two calls.

As discussed above, this arrangement is subject to malicious use by a user. For example, a malicious user on malicious user computer 160 may request a plurality of callbacks from web server 130, specifying the PSTN extension 122 associated with user computer 120 to harass the user associated with the user computer 120 and PSTN extension 122. Alternatively, the malicious user may harass the retailer associated with the web server 130 by requesting callbacks to a plurality of PSTN extensions 170-172 associated with third parties who do not desire callbacks.

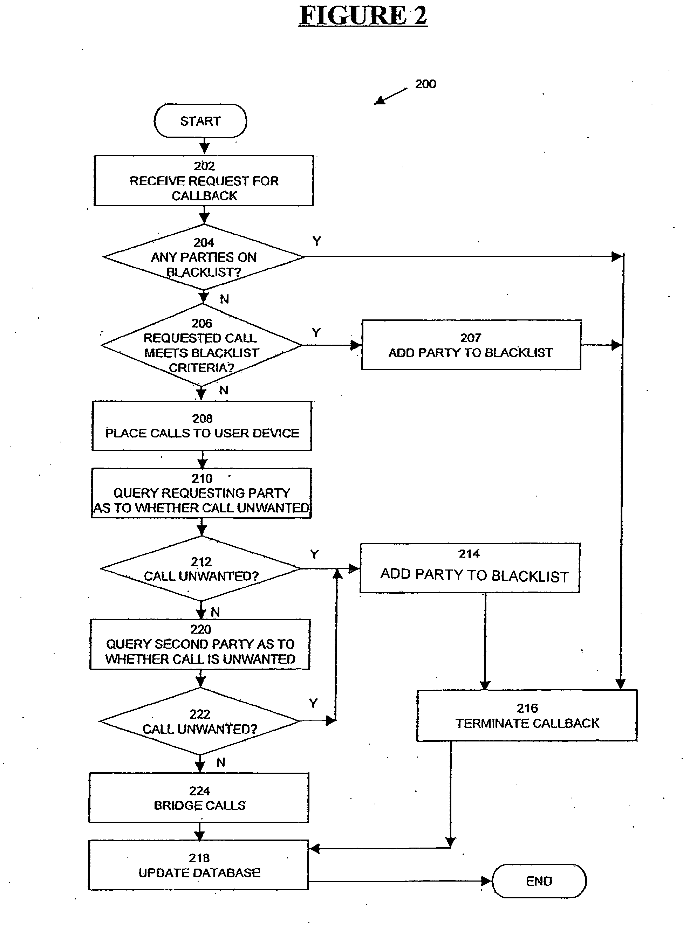

A method for preventing such malicious activity is illustrated in the flowchart 200 of Fig. 2. The method starts when a callback request is received at callback call server 150 at step 202. The source computer from which the request originated and the information identifying the device to which the request is directed are checked against blacklist at step 204. If either the source computer or the device to which the request is directed is on the blacklist at step 204, the callback is terminated at step 216, the database is updated at step 218, and the process ends.

If neither the source computer nor the device to which the request is directed is on the blacklist at step 204, a database of past and present call activity for the source computer and device to which the request is directed is consulted to determine whether the callback request meets any blacklist criteria at step 206.

There are a number of different criteria that may be used to determine whether a call has been blacklisted. One criteria that may be used is the total number of requests received from the source from which current request originated during a period of time (e.g., the past 24 hours). One way in which the source can be identified is through the IP address or URL. However, as discussed above, the IP address/URL associated with the request may not be the true IP address/URL associated with the user computer 120 from which the request is actually made. Thus, in alternative embodiments, the software on the user computer 120 (which is typically an applet downloaded to the user computer 120 from the web server 130) may include in the request an identifier of the user computer 120 which is used by the call server 150 to identify the source of the callback request.

One example of an identifier is the GUID, which is an anonymous identifier created by the guid.org service (which is performed by an independent organization not associated with the applicant) that is stored on the browser in a cookie and is unique to a user computer 120. More information about the GUID can be obtained by visiting www.guid.org. A GUID can also be created by any entity in a manner well known in the art. Thus, the GUID can be the GUID assigned by guid.org, or can be a GUID created on the user computer 120 by an entity involved in processing the call request during the process of and/or for the purpose of servicing the call request. Alternatively, the identifier may comprise a combination of the IP address and the user agent (which identifies the browser (e.g., Microsoft Internet Explorer 5.5), the operating system (e.g., Windows NT 4.0), and any installed browser plug-ins or hot fixes). This identifier is not unique in that it is possible to have two user computers 120 configured with the exact same operating system, browser, browser plugins and hot fixes, operating behind a firewall and thus appearing to have the same IP address/URL. However, this identifier is better than simply using the IP address/URL alone. It should be understood that the invention may be practiced with a wide variety of identifiers, including those that exist now and those that may be developed later. The identifiers may be associated with software on the computer, with components of the computer itself (e.g., MAC address), or by various commercial or non-profit schemes to identify devices and their users (e.g., Microsoft Passport, GUID, etc.).

Another criteria that may be used is the number of callback calls currently in progress that result from a request from the same IP address/URL or bearing the same identifier. No user should request more than one call at a time. Therefore, in some embodiments, no callback request is allowed if there is a single in-progress callback resulting from a request from the same IP address/URL or bearing the same identifier. However, in some embodiments, the threshold is set to 2 in order to account for situations in which a user mistakenly (rather than maliciously) requests a second callback.

Yet other criteria are (i) a total number of requests received from the source computer for a call from the second party during a period of time,(ii) a total number of requests received from the source computer for a call to the first party during a period of time, and (iii) a total number of requests identifying the device of the first party (regardless of the identity of the source computer) during a period of time. Again, for criteria (i), the source computer may be identified using either the IP address/URL or an identifier accompanying the request.

If any of the blacklist criteria are met at step 206, one or more of the parties associated with the request are added to the blacklist at step 207. The party or party added to the blacklist depends upon the criteria that has been met. For example, if the same source computer has exceeded the maximum allowable number of requests in the relevant period, that source computer is added to the blacklist. Likewise, if the total number of callback requests directed toward a single user device exceeds a threshold in a relevant period, the user device is added to the blacklist. The source computer may also be added to the blacklist in this situation, even if previous callback requests originated from a different source computer. The selection of a party or parties to blacklist is flexible. After the party is added to the blacklist at step 207, the callback is terminated at step 216, the database is updated at step 218, and the process ends.

If the requested call does not meet any blacklist criteria at step 206, the call server 150 places a call to the user device specified in the request at step 208. As discussed above, this call may be a PSTN or VoIP call. Once this first call is answered, the call server queries the answering party as to whether this callback is unwanted at step 210.

When the call to the user device is to a PSTN extension, the answering party may be prompted to use a particular key on the keypad (e.g., "press # if you did not request this call) to indicate that the call is unwanted. In some embodiments, when the call to user device is a VoIP call, the user is not queried as to whether the call is desired because, as discussed above, the call is automatically routed to the IP address/URL from which the request issued. However, the user may be prompted in the context of a VoIP call in some embodiments for two reasons: (1) as discussed above, some callback systems allow the specification of an IP address/URL for the VoIP phone call different from the IP address/URL from which the request issued, and (2) for some reason (e.g., address spoofing by a malicious individual), the IP address/URL accompanying the request does not correspond to the actual IP address/URL of the computer from which the request was issued. It is also conceivable that a skilled hacker could figure out how callback request packets are structured and create bogus requests (or scripts that create bogus requests, as in a denial of service attack), bypassing the application that generates the request (which is usually placed on the user computer 120 and controlled by an entity that is providing the callback service.) These bogus requests may be of either the PSTN or VoIP varieties. In such embodiments, an icon or button may be downloaded to the computer to which the VoIP call is directed so that the user can indicate that blacklisting is desired.

If the party indicates that the call is unwanted at step 212, the user computer that made the request is added to the blacklist at step 214. In some embodiments, this is accomplished by adding the IP address/URL from which the request was received to the blacklist. Alternatively, or in addition to the IP address/URL, the identifier accompanying the request is added to the blacklist. As discussed above, the identifier may be, for example, a unique identifier of the GUID type or a pseudo-unique identifier such as a combination of the IP address/URL and the user agent. In some embodiments, the user device to which the call was directed is also added to the blacklist. However, this may be problematic in that an innocent user to whom a malicious individual directed a crank call may become blacklisted and thus unable to receive calls legitimately requested by the innocent user. Thus, in some embodiments, the blacklisting of the user device is only for a limited time. In other embodiments, only callback requests from a user computer that issued the request to the user device are blacklisted so that the user device can continue to receive calls when the request issues from another (presumably the user's) computer.

After the blacklisting is performed at step 214, the callback is terminated at step 216, the call database is updated to add the requesting computer and the first party to the corresponding totals at step 218, and the process ends.

If the first party does not indicate that the call was unwanted at step 212, some embodiments of the invention query the second party as to whether the call is unwanted at step 220. This is done to cover situations in which a malicious individual directs callbacks to user PSTN extensions that will not respond to a query indicating that the call was unwanted, such as PSTN extensions that simply play a recording (such as a recorded weather forecast). If the second party indicates that the call was unwanted at step 222, steps 214, 216 and 218 are repeated. If the second party does not indicate that the call is unwanted at step 224, the first and second calls are bridged at step 224 and the database is updated at step 218.

It should be noted that the various aspects of the invention discussed above may be practiced separately or together. For example, the aspect of the invention directed toward maintaining a database of call totals and automatically blocking calls when a criteria is met may be practiced with or without the aspect directed toward adding one or more parties associated to the request to a blacklist upon the criteria being met. Similarly, the aforementioned aspects may be practiced with or without the aspect of the invention directed toward querying parties as to whether a call is unwanted and adding the requesting computer and/or the user device to the blacklist if an unwanted indication is received. Similarly, the invention may be practiced with a query as to whether the call is unwanted to only the first party to the call, or may be practiced with queries to both parties.

It should also be noted that the blacklisting discussed above may be permanent or temporary. Additionally, in some.embodiments of the invention, a blacklisted party is notified of the blacklisting and given the opportunity to request removal from the blacklist. This may be accomplished electronically (e.g., via email), by telephone, or by written communication.

## Claims

1. A method for processing a callback request, wherein said callback request is made by a user computer (120) from a web page provided by a web server (130), wherein the callback request is for a call to a user of the user computer (120), representing a first party, from an entity associated with the web server, said entity representing a second party, and wherein said callback request is transmitted from the user computer (120) to a callback call server (150), said method comprising the callback call server (150) performing the steps of:
receiving on a packet switched network comprising the Internet (110) the callback request including information sufficient to identify a device associated with the first party who wishes to receive the call and including information sufficient to identify a device associated with the second party from whom the first party wishes to receive the call, the callback request originating from a source computer, wherein the source computer may be identified based on an IP address or URL associated with the callback request or an identifier of the user computer which is included in the callback request, and wherein the source computer may be the user computer (120) or a computer of a malicious user (160);
deciding whether to block the callback request based on at least one criterion selected from the group consisting of (a) a total number of callback requests received from the source computer during a period of time, (b) a total number of calls resulting from callback requests received from the source computer currently in progress, (c) a total number of callback requests received from the source computer for a call from the second party during a period of time, (d) a total number of callback requests received from the source computer for a call to the first party during a period of time; and (e) a total number of callback requests identifying the device of the first party during a period of time; and
connecting the first party to the second party if the callback request is not blocked.

2. The method of Claim 1, further comprising the step of adding at least one parameter associated with the callback request to a blacklist if the callback request is blocked.

3. The method of Claim 2, wherein the parameter added to the blacklist is an identifier associated with the source computer.

4. The method of Claim 2, wherein the parameter added to the blacklist is the device associated with the first party.

5. The method of Claim 1, further comprising the callback call server (150) performing the steps of:
placing a first call to the device associated with the first party;
querying the first party as to whether a call from the second party is unwanted; and
terminating the first call and adding at least one parameter associated with the request to a blacklist if the first party indicates that the call from the second party is unwanted.

6. The method of Claim 5, further comprising the callback call server (150) performing the steps of:
placing a second call to the device associated with the second party; and
querying the second party as to whether a call to the first party is unwanted.
terminating the first call and the second call and adding at least one parameter associated with the request to a blacklist if the second party indicates that the call is unwanted.

7. The method of any preceding Claim, further comprising, if the callback request is not blocked, the callback call server (150) performing the steps of:
placing a first call to the device associated with the first party;
querying the first party as to whether a call from the second party is unwanted;
terminating the first call and adding at least one parameter associated with the callback request to a blacklist if the first party indicates that a call from the second party is unwanted;
placing a second call to the device associated with the second party if the first party does not indicate that a call from the second party is unwanted; and
bridging the first call to the second call.

8. The method of Claim 7, further comprising the callback call server (150) performing the steps of:
querying the second party as to whether a call to the first party is unwanted; and
terminating the first call and the second call and adding at least one parameter associated with the callback request to a blacklist if the second party indicates that a call to the first party is unwanted.

## Patentansprüche

1. Verfahren zum Verarbeiten einer Rückrufanforderung, wobei die Rückrufanforderung durch einen Anwendercomputer (120) von einer Webseite, die durch einen Webserver (130) bereitgestellt ist, gestellt wird, wobei die Rückrufanforderung für einen Anruf zu einem Anwender des Anwendercomputers (120) ist, der einen ersten Teilnehmer repräsentiert, von einer Entität, die dem Webserver zugeordnet ist, wobei die Entität einen zweiten Teilnehmer repräsentiert und wobei die Rückrufanforderung von dem Anwendercomputer (120) zu einem Rückruf-Anrufserver (150) gesendet wird, wobei das Verfahren umfasst, dass der Rückruf-Anrufserver die folgenden Schritte ausführt:
Empfangen auf einem paketvermittelten Netz, das das Internet (110) umfasst, der Rückrufanforderung, die Informationen enthält, die ausreichend sind, um eine Vorrichtung zu identifizieren, die dem ersten Teilnehmer, der den Anruf empfangen möchte, zugeordnet ist, und Informationen enthält, die ausreichend sind, um eine Vorrichtung zu identifizieren, die dem zweiten Teilnehmer, von dem der erste Teilnehmer den Anruf empfangen möchte, zugeordnet ist, wobei die Rückrufanforderung von einem Ursprungscomputer ausgeht, wobei der Ursprungscomputer basierend auf einer IP-Adresse oder URL, die der Rückrufanforderung zugeordnet ist, oder einer Kennung des Anwendercomputers, die in der Rückrufanforderung enthalten ist, identifiziert werden kann, und wobei der Ursprungscomputer der Anwendercomputer (120) oder ein Computer eines böswilligen Anwenders (160) sein kann;
Entscheiden, ob die Rückrufanforderung gesperrt wird, basierend auf wenigstens einem Kriterium, das aus einer Gruppe ausgewählt ist, die besteht aus (a) einer Gesamtzahl von Rückrufanforderungen, die von dem Ursprungscomputer während einer Zeitspanne empfangen wird, (b) einer Gesamtzahl von Anrufen, die von Rückrufanforderungen herrühren, die von dem Ursprungscomputer empfangen wurden und aktuell im Gang sind, (c) einer Gesamtzahl von Rückrufanforderungen, die von dem Ursprungscomputer für einen Anruf von dem zweiten Teilnehmer während einer Zeitspanne empfangen werden, (d) einer Gesamtzahl von Rückrufanforderungen, die von dem Ursprungscomputer für einen Anruf zu dem ersten Teilnehmer während einer Zeitspanne empfangen werden; und (e) einer Gesamtzahl von Rückrufanforderungen, die das Gerät des ersten Teilnehmers identifizieren, während einer Zeitspanne; und
Verbinden des ersten Teilnehmers mit dem zweiten Teilnehmer, falls die Rückrufanforderung nicht gesperrt ist.

2. Verfahren nach Anspruch 1, das ferner den Schritt des Hinzufügens wenigstens eines Parameters, der der Rückrufanforderungen zugeordnet ist, zu einer schwarzen Liste umfasst, falls die Rückrufanforderung gesperrt ist.

3. Verfahren nach Anspruch 2, wobei der Parameter, der zu der schwarzen Liste hinzugefügt wird, eine Kennung ist, die dem Ursprungscomputer zugeordnet ist.

4. Verfahren nach Anspruch 2, wobei der Parameter, der zu der schwarzen Liste hinzugefügt wird, die Vorrichtung ist, die dem ersten Teilnehmer zugeordnet ist.

5. Verfahren nach Anspruch 1, das ferner umfasst, dass der Rückruf-Anrufserver (150) die folgenden Schritte ausführt:
Platzieren eines ersten Anrufs zu der Vorrichtung, die dem ersten Teilnehmer zugeordnet ist;
Abfragen des ersten Teilnehmers, ob ein Anruf von dem zweiten Teilnehmer unerwünscht ist; und
Beenden des ersten Anrufs und Hinzufügen wenigstens eines Parameters, der der Anforderung zugeordnet ist, zu einer schwarzen Liste, falls der erste Teilnehmer angibt, dass der Anruf von dem zweiten Teilnehmer unerwünscht ist.

6. Verfahren nach Anspruch 5, das ferner umfasst, dass der Rückruf-Anrufserver (150) die folgenden Schritte ausführt:
Platzieren eines zweiten Anrufs zu der Vorrichtung, die dem zweiten Teilnehmer zugeordnet ist; und
Abfragen des zweiten Teilnehmers, ob ein Anruf zu dem ersten Teilnehmer unerwünscht ist;
Beenden des ersten Anrufs und des zweiten Anrufs und Hinzufügen wenigstens eines Parameters, der der Anforderung zugeordnet ist, zu einer schwarzen Liste, falls der zweite Teilnehmer angibt, dass der Anruf unerwünscht ist.

7. Verfahren nach einem der vorhergehenden Ansprüche, das, falls die Rückrufanforderung nicht gesperrt ist, ferner umfasst, dass der Rückruf-Anrufserver (150) die folgenden Schritte ausführt:
Platzieren eines ersten Anrufs zu der Vorrichtung, die dem ersten Teilnehmer zugeordnet ist;
Abfragen des ersten Teilnehmers, ob ein Anruf von dem zweiten Teilnehmer unerwünscht ist;
Beenden des ersten Anrufs und Hinzufügen wenigstens eines Parameters, der der Rückrufanforderung zugeordnet ist, zu einer schwarzen Liste, falls der erste Teilnehmer angibt, dass ein Anruf von dem zweiten Teilnehmer unerwünscht ist;
Platzieren eines zweiten Anrufs zu der Vorrichtung, die dem zweiten Teilnehmer zugeordnet ist, falls der erste Teilnehmer nicht angibt, dass ein Anruf von dem zweiten Teilnehmer unerwünscht ist; und
Überbrücken des ersten Anrufs zu dem zweiten Anruf.

8. Verfahren nach Anspruch 7, das ferner umfasst, dass der Rückruf-Anrufserver (150) die folgenden Schritte ausführt:
Abfragen des zweiten Teilnehmers, ob ein Anruf zu dem ersten Teilnehmer unerwünscht ist; und
Beenden des ersten Anrufs und des zweiten Anrufs und Hinzufügen wenigstens eines Parameters, der der Rückrufanforderung zugeordnet ist, zu einer schwarzen Liste, falls der zweite Teilnehmer angibt, dass ein Anruf zu dem ersten Teilnehmer unerwünscht ist.

## Revendications

1. Procédé de traitement d'une requête de rappel, ladite requête de rappel étant effectuée par un ordinateur d'utilisateur (120) à partir d'une page Internet fournie par un serveur Internet (130), dans lequel le rappel porte sur un appel adressé à un utilisateur de l'ordinateur d'utilisateur (120), représentant un premier correspondant, à partir d'une entité associé au serveur Internet, ladite entité représentant un second correspondant, et dans lequel ladite requête de rappel est transmise par l'ordinateur d'utilisateur (120) à un serveur d'appel de rappel (150), ledit procédé comprenant l'exécution par le serveur d'appel de rappel (150) des étapes suivantes :
la réception sur un réseau commuté par paquets comprenant l'Internet (110) de la requête de rappel comportant des informations suffisantes pour identifier un dispositif associé au premier correspondant qui souhaite recevoir l'appel et
comportant des informations suffisantes pour identifier un dispositif associé au second correspondant dont le premier correspondant souhaite recevoir l'appel, la requête de rappel provenant d'un ordinateur source, l'ordinateur source pouvant être identifié en fonction d'une adresse IP ou d'un URL associé à la requête de rappel ou d'un identifiant de l'ordinateur d'utilisateur qui est inclus dans la requête de rappel, et l'ordinateur source pouvant être l'ordinateur d'utilisateur (120) ou un ordinateur d'un utilisateur malintentionné (160) ;
la décision qu'il convient ou non de bloquer la requête de rappel en fonction d'au moins un critère sélectionné dans le groupe consistant en (a) un nombre total de requêtes de rappel reçues depuis l'ordinateur source durant une période de temps, (b) un nombre total d'appels résultant des requêtes de rappel reçues de l'ordinateur source en cours, (c) un nombre total de requêtes de rappel reçues de l'ordinateur source pour un appel provenant du second correspondant durant une période de temps, (d) un nombre total de requêtes de rappel reçues depuis l'ordinateur source pour un appel adressé au premier correspondant durant une période de temps ; et (e) un nombre total de requêtes de rappel identifiant le dispositif du premier correspondant durant une période de temps ; et
la connexion du premier correspondant au second correspondant si la requête n'est pas bloquée.

2. Procédé selon la revendication 1, comprenant en outre l'étape d'ajout d'au moins un paramètre associé à la requête de rappel à une liste noire si la requête de rappel est loquée.

3. Procédé selon la revendication 2, dans lequel le paramètre ajouté à la liste noire est un identifiant associé à l'ordinateur source.

4. Procédé selon la revendication 2, dans lequel le paramètre ajouté à la liste noire est le dispositif associé au premier correspondant.

5. Procédé selon la revendication 1, comprenant en outre l'exécution par le serveur d'appel de rappel des étapes suivantes :
la réalisation d'un premier appel du dispositif associé au premier correspondant ;
l'interrogation du premier correspondant pour établir qu'un appel par le second correspondant est souhaité ou non ; et
l'arrêt du premier appel et l'ajout d'au moins un paramètre associé à la requête à une liste noire si le premier correspondant indique qu'il ne souhaite pas l'appel du second correspondant.

6. Procédé selon la revendication 5, comprenant en outre l'exécution par le serveur d'appel de rappel des étapes suivantes :
la réalisation d'un second appel du dispositif associé au second correspondant ; et
l'interrogation du second correspondant pour établir qu'un appel du premier correspondant est souhaité ou non ; et
l'arrêt du premier appel et du second appel et
l'ajout d'au moins un paramètre associé à la requête à une liste noire si le second correspondant indique qu'il ne souhaite pas l'appel.

7. Procédé selon l'une quelconque des revendications précédentes, comprenant en outre, si la requête de rappel n'est pas bloquée, l'exécution par le serveur d'appel de rappel (150) des étapes suivantes :
la réalisation d'un premier appel du dispositif associé au premier correspondant ;
l'interrogation du premier correspondant pour établir qu'un appel par le second correspondant est souhaité ou non ; et
l'arrêt du premier appel et l'ajout d'au moins un paramètre associé à la requête à une liste noire si le premier correspondant indique qu'il ne souhaite pas l'appel du second correspondant ;
la réalisation d'un second appel du dispositif associé au second correspondant si le premier correspondant n'indique pas qu'il ne souhaite pas un appel du second correspondant ; et
la connexion du premier appel au second appel.

8. Procédé selon la revendication, comprenant en outre l'exécution par le serveur d'appel de rappel (150) des étapes suivantes :
l'interrogation du second correspondant pour établir qu'un appel du premier correspondant est souhaité ou non ; et
l'arrêt du premier appel et du second appel et
l'ajout d'au moins un paramètre associé à la requête de rappel à une liste noire si le second correspondant indique qu'un appel du premier correspondant n'est pas souhaité.
